# EUROPEAN PATENT APPLICATION

(11) **EP 3 772 279 A1**
(43) Date of publication of application: **10.02.2021**
(21) Application number: 19190286.5
(22) Date of filing: 06.08.2019
(51) Int. Cl.: A01M 1/08

(54) **DEVICE AND PROCESS FOR MASSIVE CAPTURE OF OLIVE FLIES - ADHESIVE MODEL**

(71) Applicant: Universidade de Évora, 7000-803 Évora (PT)
(72) Inventor: Rei, Fernando, 7000-737 Évora (PT); Gomes, Luis, 7040-132 Arraiolos (PT); Andrade, Leonardo, 7000-513 Évora (PT); Tlemcani, Mouhaydine, 7005-753 São Miguel de Machede (PT); Peça, José, 7005-449 Évora (PT); Dias, António, 2025-562 Tremez (PT)
(74) Representative: Gata-Goncalves, Ligia

(57) **Abstract**

The present invention relates to the development of a device for capturing flying insects, in particular olive fruit fly (*Bactrocera oleae*), a known key olive grove pest that can reduce olive production for olive oil by over 90%.

The device is autonomous and active in operation and comprises a substantially cylindrical outer body (1), a fan (2), an insect trapping mechanism within, composed of a set of adhesive chromotropic plates (6), and volatile compound (5) specific to attract the desired insect type.

In this way, it is possible to promote the biotechnical control of the olive fruit fly by capturing thereof through the device of the invention, aiming at protecting the olive grove from the harmful action associated with the presence of the populations of this pest.

The present invention thus relates to the field of agronomy, phytosanitary protection and biotechnical control of olive grove pests.

## Description

### Technical field of the invention

The present invention relates to a device for capturing flying insects, in particular the olive fruit fly *(Bactrocera oleae),* for biological control of this olive grove pest.

This device or trap is autonomous and active in operation and comprises a substantially cylindrically shaped outer body, a fan, an insect-trapping mechanism within, composed of a set of adhesive plates with chromotropic properties, and specific volatile compounds for attracting this type of insect.

The present invention thus relates to the field of agronomy, phytosanitary protection and biological control of olive grove pests.

### Background of the Invention

Crops are usually attacked by several key insect pests, which can lead to high yield losses. Olive fruit fly is a key olive grove pest and may be the most damaging to some olive groves and may reduce the production of olive oil by over 90%.

Given its high impact on olive production and quality, this pest is recurrently limited by the application of synthetic insecticides, a method of control that has several limitations, both current and future. In addition to its impact on useful biodiversity and the environment in general, it can contribute to the presence of chemical residues in production, which has a negative impact on production quality and consumer health.

On the other hand, repeated and intensive application of a pesticide promotes the likelihood of resistance phenomena, as is already the case with the only active substance acting on fly larvae (dimethoate) present inside the olive, reducing or eliminating the action of this substance in limiting the pest.

These problems underline the importance of developing new strategies against olive fruit fly, alternative to chemical control, with no impact on auxiliary insects and consumer health.

Pest limitation, through the mass capture (or massive capture) methodology, is one of the alternatives to be seriously considered, making use of a large number of traps placed in the crop area to capture a large number of pest individuals, thus significantly reducing its population and its impact on the crop.

The current technology for mass capture of olive fruit fly focuses on the use of model OLIPE traps based on the use of 1.5L or similar plastic bottles with a food solution which passively emanates attractive food volatile compounds for adult (especially female) pest insects, the flies being drawn into the trap through small holes laterally around the trap and above the attractive solution level.

Article COUTINHO, J. et al. (2009) "Effectiveness of OLIPE traps in mass capture of olive fruit fly (Bactrocera oleae) in olive groves in organic farming in Beira Interior Sul. In Simposio Nacional de Olivicultura, 5, Santarém, 24-26 Sep. - Actas Portuguesas de Horticultura. Lisbon: APH. Vol. 14, p. 101-107." describes this type of device and method of capturing these insects, having concluded that the use of OLIPE traps contributes to the reduction of this pest in the olive grove.

Also, the article by PATANITA, I. et al. "Auxiliaries and other means of controlling olive grove pests and diseases. Workshop "Good agro-environmental practices in olive oil row", Escola Superior Agraria de Beja, 2015) describes this problem and various solutions from conventional chemical control to biological control through the application of bioinsecticides and OLIPE devices in the so-called biotechnical control.

In order to influence reducing the fly population, it is recommended to place an OLIPE trap for each or every two olive trees. Given the current and future existence of a large number of intensive and super intensive olive groves (over 2,000 trees/ha) and of large dimension, it is concluded that the OLIPE trap-based method entails such a logistical effort, which makes their practical use in olive groves of this type impossible. In addition, there is still a need to renew the attractive solution and trap cleaning of flies caught in the meantime throughout the campaign. On the other hand, given the small size and side location of their holes, their ability to passively release and disseminate attractive volatiles throughout the crop area is small and ineffective for medium/long-distance insect attraction.

There is therefore a need to find and develop a sustainable, environmentally friendly and effective process to limit this pest more autonomously, which maximizes the dissemination of attractive volatiles and the consequent attractive capacity into the traps of pest insects.

The present invention proposes a device and process which solves the above problems of the prior art through biotechnical control using attractive elements for olive fruit fly (B. *oleae*) which are actively and passively disseminated, in order to attract and capture it in large quantities, avoiding the reproduction thereof, substantially limiting damage to the olive grove and its olive production.

Although the present invention is focused on olive fruit fly control, the device and process proposed herein, based on the capture of insects by adhesive chromotropic plates, can also be used to control other fly-associated pests (*dipterans*) and other flying insects, it being only necessary to adapt the attractive compound solutions being placed in the trap to the specificity of the species meant to be caught.

### Description of the Invention

The present invention relates to a device or trap for mass capture of flying insects, in particular olive fruit fly (B. *oleae*)*.*

The device is autonomous and active in operation and comprises a substantially cylindrical outer body, a fan, an insect-trapping mechanism within, composed of one or more chromotropic plates, with an attractive color adhesive for the insects to be captured, and specific volatile compounds to attract this type of insect.

The cylindrical shape of the trap, arranged vertically and having openings at the ends thereof, allows to maximize the air circulation on the inside, especially that promoted by thermal convection, in passive manner, due to the expected air heating inside the trap when it is under sun exposure. The upper opening allows for easy and efficient release of attractive volatiles around the trap. On the other hand, it also allows easy entry of the insects to be captured, attracted by these volatiles. The lower end is lined with a mesh to prevent insects from entering through this opening but allows easy entry of air into the trap.

This design is innovative because the traps developed for capturing insects usually have a lower, side or upper opening, but never the opening of their lower and upper ends, so as to allow the insects to be trapped inside.

In the case of the OLIPE reference trap, attractive volatile compounds are released outwards by small circular holes, about 1 cm in diameter and usually 4 holes, arranged around the body of the device. Passive release of volatile compounds is effective only after the inside space is saturated with these compounds. In turn, the small size and location of the openings is necessary to prevent the eventual subsequent release of flies to the exterior thereof.

The trap design of the present invention further allows only insects, which enter therein, attracted by either sex pheromone (male) or food attractive (female), to be subsequently attracted to semicircular chromotropic plates and remain trapped in its adhesive.

The chromotropic plates are illuminated by the light passing through the transparent cap of the trap, because they are inside the trap body and are not visible directly from the outside. This eliminates the impact that preferably yellow-colored adhesive traps usually have on non-target diversity of flying insects, especially parasitoids, by being attracted to the adhesive due to its yellow color and being caught unnecessarily when traps placed outdoors on olive treetops.

In another aspect, the present invention also relates to a process of biotechnic control against flying insects, in particular olive fruit fly, and therefore in particular of the biotechnological control for olive grove protection, which provides for the placement of at least 4 devices of the present invention, or multiples of that number, depending on the area to be protected, arranged in diamond or rectangle, 30 to 40 meters apart, placed at the beginning of the pest activity, prior to the egg laying period in the olives.

Traps may remain in place until production is harvested. This arrangement was defined based on previous studies carried out with this trap design, using a reference volatile compound, and under controlled atmosphere conditions, wherein its fan has been in operation for a period of 6h.

Under these conditions it was possible to detect the presence of the volatile substance more than 10 meters from the trap, and it is foreseeable that this distance will be increased by the action of the air masses mobility in the olive groves, and by the high sensitivity of sex pheromone detection by pest males, which is far superior to the detection capabilities of laboratory apparatus/techniques developed for this purpose. By comparison, it was not possible to detect the presence of the reference volatile substance emitted from the reference OLIPE trap, 0.5 meters from its location.

The device of the present invention further provides for accessories which are intended to increase its working capacity, such as the existence of small solar panels capable of producing power to supply the fan and the presence of humidity and temperature sensors, capable of controlling the start of operation of said fan or putting it in idle mode.

### Description of the figures

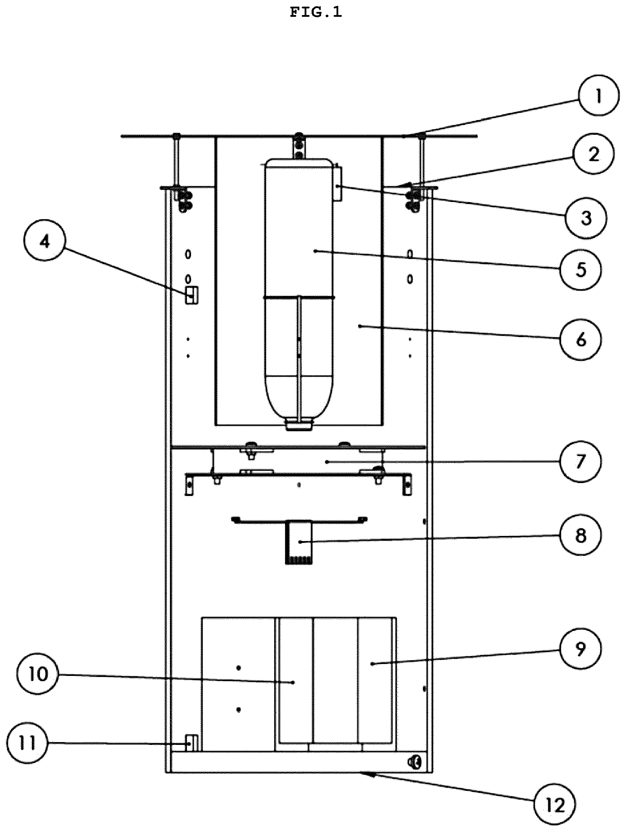

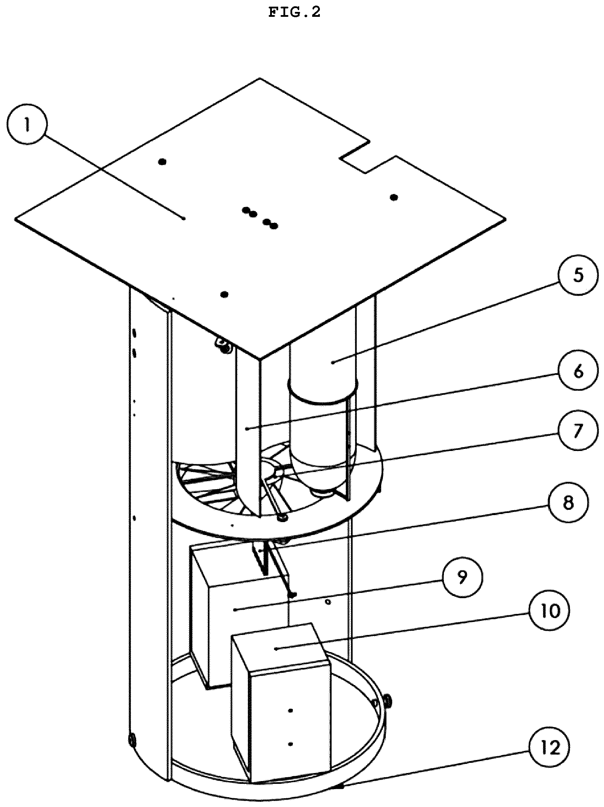

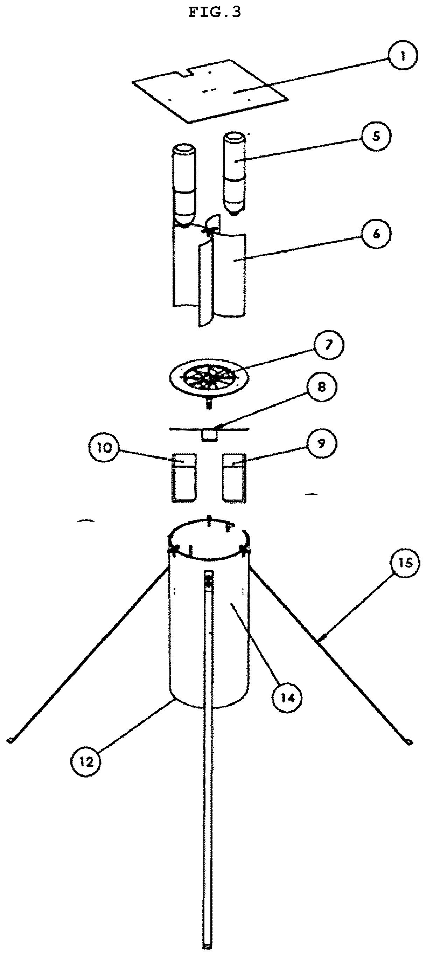

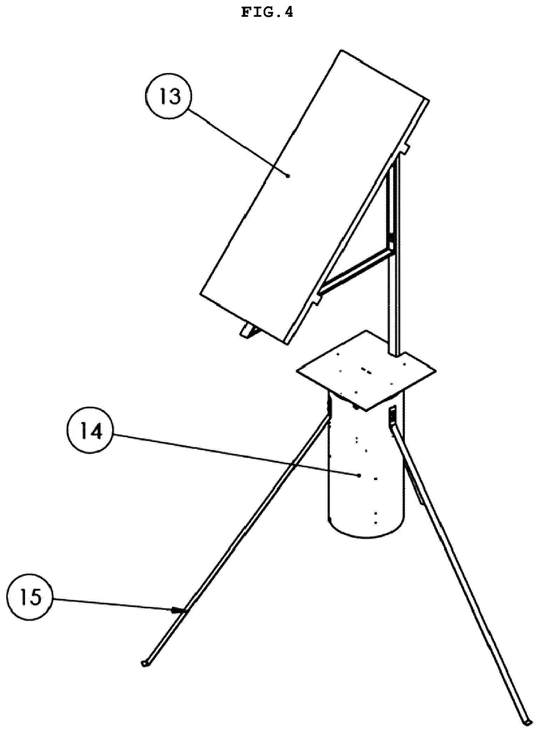

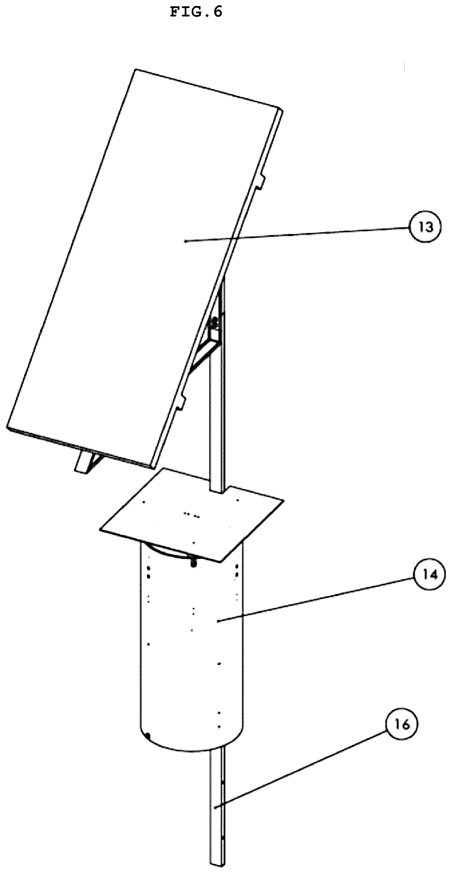

**Fig. 1** represents the embodiment of the device of the present invention, model "Adhesive", in a side view, wherein:
   1 - Represents the trap cap
   2 - Represents the upper opening of the trap
   3 - Represents a sex pheromone diffuser
   4 - Represents a temperature and humidity sensor
   5 - Represents a container with a solution containing an attractive food compound or combination of compounds
   6 - Represents a plate with chromotropic adhesive
   7 - Represents a fan
   8 - Represents the absorbent material to contain the attractive food solution
   9 - Represents a battery
   10 - Represents the box with the electronic circuit regulating the trap operation (fan/thermometer) and the solar panel power regulator
   11 - Represents the current converter and the solar panel power manager
   12 - Represents lower trap opening
   13 - Represents the solar panel
   14 - Represents the body of the trap
   15 - Represents trap support feet
**Fig. 2** represents the embodiment of the device of the present invention, model "Adhesive", in a perspective view, wherein:
   1 - Represents the trap cap
   5 - Represents a container with a solution containing an attractive food compound or combination of compounds
   6 - Represents a plate with chromotropic adhesive
   7 - Represents a fan
   8 - Represents the absorbent material to contain the attractive food solution
   9 - Represents a battery
   10 - Represents the box with the electronic circuit regulating the trap operation (fan/thermometer) and the solar panel power regulator
   12 - Represents lower trap opening
   15 - Represents trap support feet
**Fig. 3** represents the embodiment of the device of the present invention, model "Adhesive", in an exploded view, wherein:
   1 - Represents the trap cap
   5 - Represents a container with a solution containing an attractive food compound or combination of compounds.
   6 - Represents a plate with chromotropic adhesive
   7 - Represents a fan
   8 - Represents the absorbent material to contain the attractive food solution
   9 - Represents a battery
   10 - Represents the box with the electronic circuit regulating the trap operation (fan/thermometer) and the solar panel power regulator
   12 - Represents lower trap opening
   13 - Represents the solar panel
   14 - Represents the body of the trap
   15 - Represents trap support feet
**Fig. 4** represents the embodiment of the device of the present invention, model "Adhesive", in a complete assembly view, wherein:
   13 - Represents the solar panel
   14 - Represents the body of the trap
   15 - Represents trap support feet
**Fig. 5** represents another embodiment of the device of the present invention, model "Adhesive", with the solar panel placed on the ground next to the trap, wherein:
   13 - Represents the solar panel
   14 - Represents the body of the trap
   15 - Represents trap support feet
**Fig. 6** represents another embodiment of the device of the present invention, with the "Adhesive" model trap mounted on a vertical pole, wherein:
   13 - Represents the solar panel
   14 - Represents the body of the trap
   16 - Represents the pole where the trap is attached.

### 1. Characterization of the capturing device

The device of the present invention comprises an outer body (14), a fan (7), a flying insect trapping mechanism which comprises one or more plates, preferably made of plastic, with chromotropic adhesive (6), preferably yellow in color, and devices for containing and/or diffusing specific volatile compounds to attract a particular type of insect (3 and 5).

Preferably, the target insect to capture is the olive fruit fly *(Bactrocera oleae).*

The outer body (14) is substantially cylindrical in shape, about 50 to 100 cm high, preferably about 60 to 80 cm high, more preferably about 70 cm high, and 30 cm in diameter. Its vertical placement, having openings at its two ends (2 and 12), allows to maximize the air entry and exit from the interior thereof, by thermal convection, and actively by the operation of its fan (7).

The outer body (14) may be made of any type of material that withstands outdoor environmental conditions, such as plastic (PVC). Other materials such as metal (aluminum) and wood may be used. The outer body (14), being made of metallic material such as aluminum alloy, can be equally lightweight and more resistant to natural elements, while being easier to clean and maintain. However, it contributes to significantly increase the temperature inside the trap, impacting the operation of the electronic components (10) necessary for the trap operation, namely the fan control (7). Material such as wood increases the cost and weight of the trap.

The outer body (14), being made of plastic, metal or wood material, has characteristics of lightness and resistance to natural elements, and protection of its internal components.

In all the aforementioned forms, the device of the present invention may be placed on the ground above removable or non-removable supports (15) for this purpose, on existing supports and may be used for this purpose or suspended on poles (16) placed for this purpose.

Inside thereof, the device comprises a cyclically operated fan (7), i.e. with interruptions in its operation in order to save energy, and a current converter (11), which converts the 12v alternating current into direct current between 220 to 270v, which is supplied to the electrocuting device.

Power for the operation of electrical and electronic components can be supplied by an individual battery (9), powered by a photovoltaic solar panel (13) and its regulator (11), ensuring the autonomy thereof during operation, or via a small electric generator network-connected to more than one device (not shown in the figures).

The main purpose of the fan (7) is to actively disseminate and promote air circulation within the trap to promote and maximize the release of volatile compounds intended to attract insects to capture or control and, therefore, it is understood that the device of the invention actively promotes pest capture and control.

In contrast, the passive form of pest control occurs when the fan (7), which is set to operate in cycles, i.e. for a period of time followed by a pause, is in idle mode during which the trap only passively diffuses volatile insect attracting compounds by thermal convection, favored and maximized by the vertical and cylindrical shape of the trap (14) and the existence of openings at both ends thereof (2 and 12).

These volatile compounds may be gradually dispensed from a solution prepared for the purpose, stored in suitable containers (5), depending on the amount and type of solution composition required for each insect type, and/or from sex pheromone diffusers (3), by placing 2 to 3 diffusers per trap.

The solution of attractive compounds may be placed on an absorbent material (8), such as a fabric or sponge, with flaps/notches to facilitate air circulation and air contact with such material, and to promote the volatility and diffusion of the volatile compounds.

The absorbent material (8), which may be a sponge-fabric rectangle, or other commercially available absorbent material/structure, saturated with attractive solution, is suspended inside the trap and below the fan via an attaching structure, such as a wire, which attaches it to supports on the inner walls of the trap, the absorbent material being fed with attractive solution through a tube that connects to the container (5).

When present, pheromone diffusers (3) are placed above the fan (7), near the attractive solution container (5) and near the upper trap opening (2).

Volatile compounds suitable for attracting these insects are, for example, compounds emanating from attractive food solutions, sex or aggregation pheromones, etc., and combinations thereof currently available on the market. For the specific case of olive fruit fly are, for example, commercially available 4% ammonium dihydrogen phosphate solutions, Endomysil and pest-specific sex pheromone diffusers.

To obtain the limiting effect on the pest population, it is recommended to place at least 4 diamond-shaped devices of the present invention spaced 30 to 40 meters apart at the beginning of the pest activity in advance of the laying egg period in the olives for an influence area of about 3600 m², i.e. 11 to 12 devices per hectare.

attractive food volatile compounds have the primary function of attracting flies, especially laying females, while sex pheromone-based compounds help to attract males (in this species), with the added benefit of creating a confusing sexual effect, preventing males from finding and fertilizing females due to sex pheromone saturation in the area of influence of the airflow produced by the capture station, this being an added advantage of the invention.

Volatile substances may be emitted from 4% ammonium dihydrogen phosphate solutions, Endomysil and sex pheromone diffusers. Considering the size of the two attractive solution containers (5) (1.5 L each) it is expected that they will need to be replaced after 1 to 1.5 months, depending on the outside temperature of the trap. Regarding sex pheromone diffusers (3), their replacement depends on the information provided by the manufacturer. In the case of diffusers used in the tests performed, their replacement should take place between 1.5 and 2 months.

In addition to the attractive effect of the males inside the traps for subsequent capture/death, it is intended to promote the effect of 'sexual confusion' on the influence area of the traps, i.e. 20 to 30 meters radius, according to values obtained with a reference volatile in controlled atmosphere studies. Due to the release of the sex pheromone by the trap, the atmosphere surrounding the trap relative to the above-described radius will make it difficult for males to identify the presence of females present in the area and thus to inseminate their eggs. For this purpose, it is recommended to place 2-3 sex pheromone diffusers (3) inside each trap.

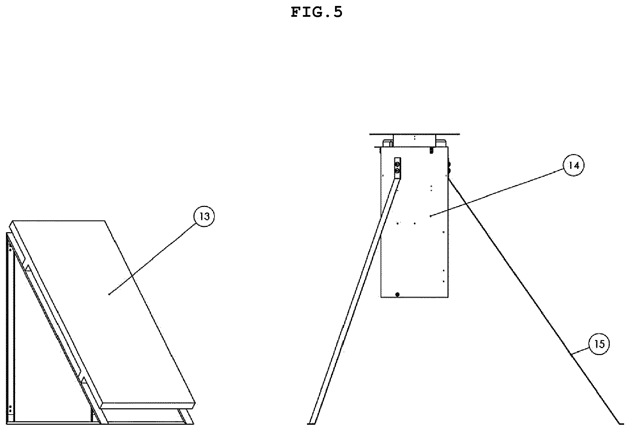

The capturing device may be placed on purpose-built supports, such as metal feet (13), other existing vertical supports, or yet vertical poles/supports (16) arranged for this purpose, which allow the top of the trap to be attached at a height of about 1.5 m from the ground, this usually being the recommended height to maximize the attraction of the olive fruit fly, given the more recurring location of the flies in olive grove tree tops, in order to favor solar panel exposure (13) for a longer period of time and to facilitate access to the interior of the trap for maintenance purposes, through its upper (2) and lower (12) openings. Alternatively, and in areas with constant and intense wind, the solar panels (13) may be placed under a metal support structure (15). It preferably comprises 2 side-by-side triangles, screwed to 2 wooden or cement bases, set at ground level (Fig. 5).

Thus, the device of the present invention actively and passively promotes the attraction of insects inwardly by food and sexual attraction, thereby limiting and controlling pest populations, either by reducing the number of individuals by their capture and subsequent collection, or by disturbing its reproduction through sexual confusion by placing diffusers (3) containing sex pheromones in the traps during the fly breeding season. To maximize this objective, it is recommended to place two or three sex pheromone diffusers (3) inside the trap (14).

Its active mode of operation and the large size of the capturing device further reduce the number of traps to be used per hectare of crop, and the logistical needs necessary for its proper functioning and efficiency, allowing its use in olive groves with reduced planting distance, such as intensive and super intensive models.

Its design allows maximizing the release of volatiles, not only actively but passively, by thermal convection. By eliminating insects, since being trapped in the large and surface capture means (5), it does not require periodic cleaning of the trap to remove trapped insects, which could otherwise reduce the adhesive surface available for retaining more insects.

The substantially cylindrical shape (14) allows maximizing the formation and conduction of the actively produced fan air flow as well as passive release of volatile, insect-attractive compounds by thermal convection.

The volatile attractive food solution container (5), with a total volume of about 3 liters, guarantees its autonomous operation over an operation period of one to one and a half months in order to limit egg laying of the pest in the olives.

This period may vary depending on the weather conditions in the protected olive grove area and therefore it is recommended to place the traps when the adult flight begins, predictably in early Spring, shortly after the start of the pest activity and before the expected breeding season of these insects, which occurs roughly during the olive lignification (endocarp) phase and may remain on the field until the harvesting phase, that is, a period which may vary from 7 to 8 months in Mediterranean climates, where olive growing is more frequent, usually during spring, early summer, and autumn.

The mass capturing device/trap comprises within a set of 2 adhesive chromotropic plates (6), preferably semi-cylindrically in shape, arranged in contact with each other at their apex, to maximize the yellow attractive surface.

The yellow color of the chromotropic plate adhesive is preferably used as it has the most effect on the visual attractiveness of dipterous insects. However, plates of yellow or other color may be used provided that it has a chromotropic effect for flying insects.

The device also has safety systems, namely a temperature sensor (12) that turns off the trap operation to safeguard the electrical/electronic components (10 and 11) inside, when the temperature reaches 40°C, and a cut-off switch (3), to disconnect the electrical current inside the trap, and specifically from the electrocuting device (6), allowing for safe maintenance operations inside the trap.

### 1.1 Operation

Insects, attracted by the volatile compounds dispersed from the interior through the upper opening (2), are directed to the adhesive plates (6) because of its yellow color. Usually, the use of yellow chromotropic traps with adhesive has a detrimental effect on insect diversity in the areas where they are placed, as they are nonspecific and attractive not only to dipterans but also to useful insects such as hymenopteran parasitoids, whereupon the use thereof in large numbers is to be avoided.

To eliminate this negative effect, the plates are completely inserted into the body of the traps (14) and their yellow color is not observable from the outside of the trap except for its upper end which is protected by a transparent plastic plate (1) larger than the diameter of the device body (14). Thus, only the insects to be controlled for the relevant pest are attracted to the volatile substances spread by the trap, entering the opening defined between the upper end of the trap and said transparent plate. The existence of such a plate (1) allows the interior of the trap to be protected from the weather effects (e.g. precipitation), and the entry of sunlight so that insects inside the trap are attracted to the yellow colored adhesive material (6).

The attractive solution is dispensed from one or preferably two containers (5) which are placed between the adhesive plates (6), thanks to their semi-cylindrical shape. The absorbent material (8) with the attractive solution is placed in the lower half of the trap just below the fan (7) while the sex pheromone diffusers (3) are placed next to the adhesive plates (6) and the containers (5).

The absorbent material (8) preferably comprises notches to facilitate air circulation and contact and to promote the volatility of the compounds in solution. The released volatile compounds are sucked in by the fan (7) and sent to the top of the trap, passing through the semi-cylindrical adhesive plates (6), outwards through an opening in the top of the trap (2). As volatile compounds pass between the chromotropic plates (6), the attraction of insects to the surface thereof is thus maximized due to its yellow color.

### 2. Flying insect capture process

### Operation Process:

a) Placing traps in the field, preferably in early Spring, before the fly breeding season,
b) placing the traps at least 30 m apart from each other, in a diamond or rectangle arrangement, between the inter rows of the olive grove, in a total of 11 to 12 traps per hectare of crop,
c) inspecting the level of attractive solution in the trap containers and replacing thereof, if necessary,
d) checking the amount of insects caught on the adhesive plates to assess the need for cleaning and/or replacing a new layer of adhesive on the plates;
e) checking the condition of the solar panels and their wiring, connected to the current regulators and batteries, inside the traps.

Attractive solution replacement can be done by adding the desired solution through the tubes connecting the containers to the traps. As these are accessible through the trap cap, it is not necessary to remove any component of the trap for this operation.

To clean and replace the adhesive on the plates, the cap of the trap must be removed to access the adhesive plates that are attached to the cap.

Once the olive has been harvested, the traps and their solar panels can be removed from the olive grove after disconnecting from their current regulators inside the traps.

### Examples

### Example 1. Olive fruit fly capturing device

The mass capturing device/trap, adhesive model, consists of a cylindrical outer body (14), about 70 cm high and 30 cm wide, which has a fan (7) and a set of 2 chromotropic plates (6) with yellow semi-cylindrical adhesive inside.
The fan (7) is cyclic and energy-saving, not working at night when insects are inactive, as is the case with the olive fruit fly.
Insects are caught by being trapped in the glue of the chromotropic plates (6). The 2 plates (6) were brought into contact by their apex to maximize the attractive and contact surface, and thus, the insects that entered the trap, attracted by the volatiles disseminated from within, were directed to the adhesive plates due to its yellow color. The attractive food solution was gradually dispensed from two 1.5L containers (bottles) placed inside the adhesive plates due to its cylindrical shape.

The attractive volatile substances used comprised an attractive food solution and sex pheromone, the attractive solution being in this example a 4% ammonium dihydrogen phosphate solution. About 0.5 mL of the solution was cyclically poured on a square portion of sponge-tissue (8), of about 9 cm by 9 cm, with notches at its base to facilitate air circulation and contact with the sponge and promote solution volatility. The volatiles were sucked in by the fan (7) and sent into the yellow chromotropic plates (6) and then out through the opening at the top of the device. The sex pheromone is released from 2-3 diffusers (3), placed near the chromotropic plates (6) and near the upper opening of the trap.

In this model a photovoltaic solar panel (13) was implemented, with the dimensions of 120x53cm, which stores the energy in an individual battery (9), 12V and 12Ah, ensuring its autonomy during its operation period. The operation and management of the capturing device is accomplished by several electrical/electronic components, including a solar panel power manager, for managing the power supplied between the solar panel and the battery, a 12V to 5V DC/DC converter (11).

By reducing the voltage provided by the battery/solar panel to supply the circuits running at lower voltages, a Raspberry pi3 system was used to manage the overall operation of the capturing device, a relay module to manage fan operation, an RTC module DS1306 (Real Time Clock), to enable to identify day or night periods in the system duty cycle management, a DTH11 temperature and humidity sensor, to shut down the system when the temperature inside the device is very high or when ambient temperature does not allow pest activity to be controlled.

This capturing device is supported by three metal feet (15), which place its main body at a height of 1.5 m.

## Claims

1. A device for capturing flying insects **characterized in that** it comprises:
- an outer body (14) of substantially cylindrical shape,
- a fan (7),
- a container (5) for the containment of an attractive solution for flying insects,
- an attractive solution for flying insects, comprising one or more food volatile compounds, attractive to flying insects, poured on an absorbent material (8),
- one or more flying insect sex pheromone diffusers (3),
- an insect capture means comprising one or more chromotropic plates (6) which are comprised of an attractive color adhesive plate for flying insects, and
- a power supply for supplying power to said flying insect capturing device.

2. A device according to claim 1, **characterized in that** the outer body (14) is substantially cylindrical in shape, about 50 to 100 cm high, preferably about 60 to 80 cm high, more preferably about 70 cm high and 30 cm wide and is made of plastic, metal or wood material.

3. A device according to claim 1, **characterized in that** the fan (7) is capable of continuous operation or defined cycles at predefined time intervals.

4. A device according to claim 1, **characterized in that** the container (5) is composed of 2 units, each having a capacity of about 1,5L, and is located in the space defined by two semicircular chromotropic plates (6).

5. A device according to claim 1, **characterized in that** the attractive food solution for flying insects comprises ammonium dihydrogen phosphate and/or Endomysil.

6. A device according to claim 1, **characterized in that** the absorbent material (8), where the attractive food solution is poured, is a textile or sponge material with flaps/notches which is fixed to the inner walls of said device, preferably below the fan (7).

7. Device according to Claim 1, **characterized in that** the insect capture means is composed of 2 semicircular chromotropic plates (6) with yellow adhesive.

8. A device according to any one of the preceding claims, **characterized in that** the power supply is a battery (9).

9. A device according to any one of the preceding claims, **characterized in that** it comprises an energy generation means, in particular at least one solar panel (13).

10. A device according to any one of the preceding claims, **characterized in that** it comprises a temperature sensor and/or a humidity sensor (4).

11. Device according to any one of the preceding claims, **characterized in that** it comprises an individual support means, consisting of support feet (15) or a pole (16).

12. A process for capturing flying insects and phytosanitary controlling of fruit tree pests caused by such insects, **characterized in that** a set of devices according to claims 1 to 11 is placed in the areas where phytosanitary control is to be performed.

13. Process according to claim 12, **characterized in that** the flying insect to be captured is the olive fruit fly *(Bactrocera oleae)* for phytosanitary control of olive groves.

14. Process according to any one of claims 12 to 13, **characterized in that** between 11 and 12 devices according to any one of claims 1 to 10, are installed per hectare of olive grove in a diamond or rectangle arrangement, between the inter rows of the olive grove.

15. Process according to claim 13, **characterized in that** the devices according to any one of claims 1 to 11 are installed prior to the predicted breeding season of the olive fruit fly (*B. Oleae*).
